# EUROPEAN PATENT SPECIFICATION

(11) **EP 0 494 096 B1**
(45) Date of publication and mention of the grant of the patent: **08.03.1995**
(21) Application number: 92200011.2
(22) Date of filing: 30.12.1991
(51) Int. Cl.: A23C 19/16, A01J 27/02

(54) **Method of applying a protective coating around a cheese, and apparatus for evaporating a dispersion liquid from a cheese**
Verfahren zum Auftragen einer Schutzschicht rund um einen Käse und Vorrichtung zum Verdampfen einer Dispersionsflüssigkeit von einem Käse
Procédé pour appliquer une couche de protection autour d'un fromage et installation pour évaporer un liquide de dispersion d'un fromage

(30) Priority: 28.12.1990 NL 9002888
(43) Date of publication of application: 08.07.1992
(73) Proprietor: FRIESCHE INDUSTRIELE BEDRIJVEN B.V., NL-8912 AP Leeuwarden (NL); Van der Molen, Sjoerd, NL-8446 NJ Heerenveen (NL); C.Z.I. "DE GOEDE VERWACHTING", NL-8711 CK Workum (NL)
(72) Inventor: Nijdam, Theunis, NL-8561 AM Balk (NL)
(74) Representative: Smulders, Theodorus A.H.J., Ir.

(56) References cited:
- EP-A- 0 149 406
- FR-A- 872 617
- FR-A- 2 310 808
- FR-A- 2 396 512
- NL-A- 7 603 235
- FOOD SCIENCE & TECHNOLOGY ABSTRACTS, no. 87-01-P0096, Columbus, Ohio, US; M.P. SHCHETININ et al.: "Effect of some physical factors on the rate of formation of protective coatings on cheeses", & MOLOCHNAYA PROMYSHLENNOST 4. REF. NO. 7, P11-13, 1985

## Description

The invention relates to a method according to the preamble of claim 1.

In such a known method, after being provided with a layer of the disperse mixture, for instance by immersion or spraying, and before being set aside, dispersion liquid is at least partly removed from the cheese by passing heated conditioned air along the cheese.

The cheese can then be stored on the second support or be transferred from the second support to a further support, such as a shelf. Storing the cheese may for instance serve to allow the cheese to ripen.

The advantage of evaporating dispersion liquid adhering to the cheese is that it limits fouling of the second support or a further support with dispersed material, in that when the dispersion liquid is being evaporated the protective layer is formed or at least acquires coherence, before the cheese is placed on the second support and remains substantially bonded to the cheese when the cheese is removed from the second support again. This applies likewise when removing the cheese from any further support and in turn brings with it the advantage that the second and any further supports require less intensive cleaning to remove the adherent dispersed material. The dispersed material removed from the second and any further supports moreover forms a constituent of the waste water which affects the environment undesirably and for which in many cases pollution taxes must be paid, so that a limitation of the amount of dispersed material to be removed is also desirable with a view to limiting the environmental effects thereof.

A drawback of the known method, however, is that a great deal of dispersed material forms a cake on the first support. The layer of dispersed material caked on the first support is difficult to remove. Moreover, the cake of dispersed material, when removed, forms an undesirable constituent of the waste water in the same manner as it does upon removal from the second and any further supports.

From FR-A-2 310 808 a method and an apparatus for painting a cheese is known in which a first face of a cheese is coated and dried while the cheeses are supported on an endless belt, then each cheese is turned with the coated and dried face onto a second support, after which the second face is painted and dried.

The object of the invention is to provide a method for providing a protective coating on a cheese, in which the necessity of removing cake of dispersed material is further limited. The invention aims to achieve this object by providing a method in which, on the one hand, the drawback of caking of dispersed material is obviated while, on the other hand, pollution of the second support and any further support remains limited.

In accordance with the present invention, this object is achieved by carrying out a method as described in the opening paragraph in accordance with the characterizing part of claim 1.

Because evaporation concerns substantially exclusively dispersion liquid which has been applied to those portions of the surface of the cheese that are located at a distance from the first support, little dispersion liquid that has come to be present on the first support is evaporated and the disperse mixture of which it forms a part can at regular intervals be easily removed from the support, for instance by rinsing.

Because a part of the surface of the cheese from which adherent dispersion liquid has been evaporated is turned towards the second support, a surface of the cheese from which the adherent dispersion liquid has been evaporated will be in contact with that support after arrangement of the cheese on that support. Adherence of dispersed material to the support upon removal of the cheese from that support is hereby limited as in the known method.

The invention is based on the insight that in order to limit the adherence of dispersed material to the second support and to any further supports, it is sufficient to evaporate the dispersion liquid wholly or partly from the surface of the cheese which comes into contact with that support or those supports when the cheese is placed thereon.

A further advantage of the invention is that relatively little energy is used in that only the dispersion liquid applied to a part of the surface of the cheese is evaporated.

Placing the cheese on the second support while turning towards this second support a portion of the cheese from which dispersion liquid has been evaporated, can be done by hand. It is also possible, however, to use mechanical means for this purpose.

The invention is further embodied by an apparatus according to claim 11.

Such an apparatus enables the evaporation of dispersion liquid from the cheese to be carried out in an efficient manner, while it is ensured that any dispersion liquid that has ended up on the first support means is hardly evaporated, if at all, so that the disperse mixture of which it forms part can easily be removed from that first support.

An advantage of using infrared radiation for evaporating the dispersion liquid is that the dispersion liquid is heated while air is heated only to a very limited extent, so that relatively little energy is used. In the known method, where the dispersion liquid is evaporated by passing heated conditioned air along it, a very great deal of energy is carried off along with the heated air or an expensive installation is necessary for reconditioning the heated air. A further advantage of the use of infrared radiation is that the radiation penetrates the cheese only to a limited extent, so that the rise in temperature of the cheese is limited.
Further, infrared radiation is eminently suitable for heating one side of the cheese.

The blowing element enables in a simple manner to obtain a directed air stream to be passed along the surface of the cheese to be treated, which air stream spreads after having passed the cheese, so that a proper spread of evaporated dispersion liquid is obtained.

Since the infrared radiation source is arranged for emitting radiation in a direction which intersects the axis of the outlet opening adjacent the conveyor track, during operation the infrared radiation will intersect the air stream in front of the surface of the cheese to be treated. The surface to be treated can thus be irradiated by the infrared radiation source at an approximately right angle while at the same time an air stream is passed along the surface of the cheese to be treated. Thus, an improved removal of the dispersion liquid is obtained. A further advantage is that the air stream has a cooling effect, so that the temperature rise of the irradiated portion of the cheese can be limited.

The invention will now be further explained and illustrated with reference to the accompanying drawings, in which:

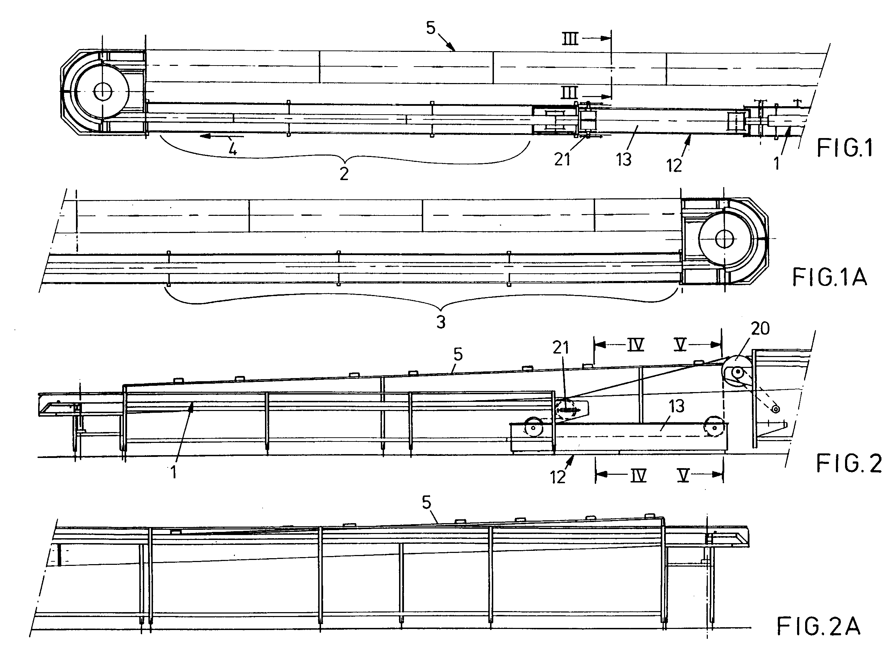

Fig. 1 is a top plan view of a first part of an embodiment of an apparatus according to the invention;
Fig. 1A shows the remaining part of the apparatus shown in Fig. 1;
Figs 2 and 2A are side elevations of the parts shown in Figs 1 and 1A, respectively;
Fig. 3 is a section taken on the line III-III of Fig. 1;

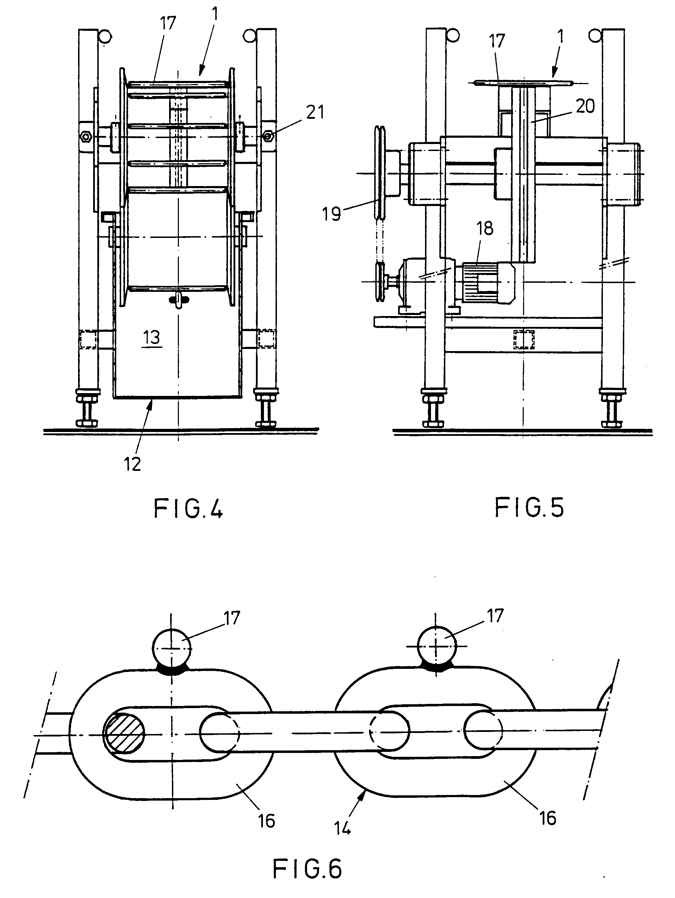

Fig. 4 is a section taken on the line IV-IV of Fig. 2;
Fig. 5 is a section taken on the line V-V of Fig. 2; and
Fig. 6 is a side elevation of a conveying means for displacing the cheese.

The apparatus according to the embodiment shown comprises an endless conveyor track 1, to which cheeses can be fed in an area 2 and from which cheeses can be removed in an area 3. The conveyor track 1 is arranged to traverse an endless path in the direction indicated by arrow 4. Arranged downstream of the supply area 2 in the direction of conveyance is a drying tunnel 5. The conveyor track 1 forms a first support on which the cheeses rest during the evaporation of dispersion liquid. By designing the first support as the conveyor track 1 and arranging the means for evaporating dispersion liquid in a drying tunnel 5 through which passes the track 1, the evaporation of dispersion liquid from the cheeses can be carried out continuously. However, the invention can equally be practised using a stationary first support.

In the embodiment shown, the drying tunnel 5 is arranged along one side of the endless conveyor track 1. In order to provide for a relatively short conveyor track at a given length of the drying tunnel, the drying tunnel may also extend over portions of the conveyor track on the side of and adjacent to a supply area and/or a removal area.

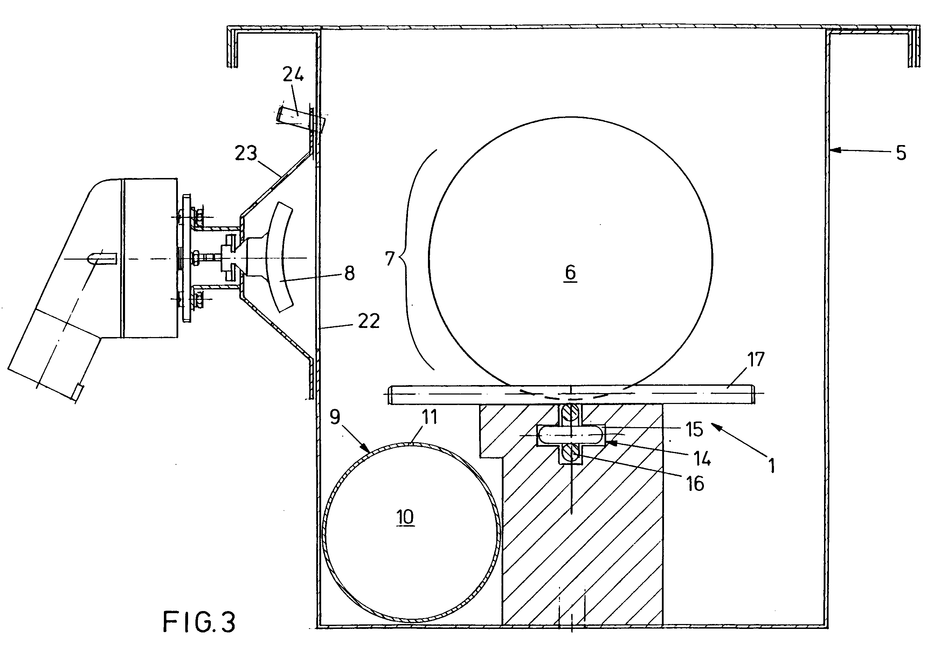

Before the cheeses are placed on the conveyor track 1, a disperse mixture comprising a dispersion liquid and a material dispersed therein is applied to the cheeses. The disperse mixture may for instance be an aqueous synthetic resin dispersion of copolymers having a solid content of about 40%. In the area 2 the cheeses are placed on the conveyor track 1 and passed along the endless track 1 in the direction indicated by arrow 4 and through the drying tunnel. Fig. 3 shows a cheese 6 located on the conveyor track 1 in the drying tunnel 5. It is not essential to the invention whether the disperse mixture is applied to the cheeses by means of an immersion bath or other means, such as a spraying booth or brushing means.

Arranged in the drying tunnel 5 are means for evaporating dispersion liquid from the cheese, which are adapted for evaporating dispersion liquid mainly from those portions of the surface of the cheese 6 that are directed away from the conveyor track 1 and hence are located at a distance from the conveyor track. As a result, dispersion liquid clinging to the conveyor track 1 is hardly evaporated, if at all, so that the dispersed material does not cake on the conveyor track 1 and the disperse mixture can be removed therefrom in a simple manner.

According to the embodiment shown, the means for evaporating dispersion liquid from the cheese are adapted for evaporating dispersion liquid from one side 7 of the cheese 6 in particular. To evaporate dispersion liquid mainly from one side is advantageous with a view to saving energy.

After being subjected to dispersion-liquid evaporation treatment, the cheeses are placed on a second support (not shown), where they are stored or whence they are transferred to a further storage support. During storage, the cheeses can, if necessary, ripen or ripen further. When the cheese is being positioned on the second support, a part of the cheese surface from which dispersion liquid applied thereto has been evaporated is turned towards that support. This limits fouling of the second support and any further storage support, so that these supports can also be cleaned in a relatively simple manner. It has been found in practice that if cheeses treated with a disperse mixture as mentioned are placed on a storage support in undried condition, a 32 kW high pressure spray is required to clean the support. If the side of the cheese through which it rests on the support surface has first been subjected to dispersion-liquid evaporation treatment, it turns out that a 15 kW high-pressure spray is sufficient to remove residues of the disperse mixture from the storage support in the same period of time.

A further advantage of the evaporating dispersion liquid from substantially one side of the cheese which is to be directed to a second support and any further support, is that upon ripening of the cheese the protective layer of the cheese at the bottom of the cheese has a relatively high stability, so that sagging of the cheese is limited. This advantage is particularly important when manufacturing substantially spherical cheeses.

The one side from which dispersion liquid is evaporated may be a top surface or, as is the case in the embodiment shown, a vertical side 7 parallel to the conveyor track 1. This last offers the advantage that the cheese 6 can simply be tilted off the conveyor track 1 onto the second support, the cheese 6 thereby coming to rest on the side 7 from which the dispersion liquid has been evaporated.

In the embodiment shown, the means for evaporating dispersion liquid comprise an infrared radiation source 8 (see Fig. 3). An advantage of using infrared radiation for evaporating the dispersion liquid is that the dispersion liquid is heated while air is heated only to a very limited extent, so that relatively little energy is used. In the known method, where the dispersion liquid is evaporated by passing heated conditioned air along it, a very great deal of energy is carried off along with the heated air, or an expensive installation is necessary for reconditioning the heated air. A further advantage of the use of infrared radiation is that the radiation penetrates the cheese only to a limited extent, so that the rise in temperature of the cheese is limited. Further, infrared radiation is eminently suitable for heating one side of the cheese.

Insofar as the cheese is heated, this offers an advantage, in conjunction with the dispersion-liquid evaporation treatment of one side of the cheese, in that a uniform ripening is obtained during subsequent ripening. An explanation for this would seem to be that the heat displaces moisture and salt from a portion of the cheese that forms a bottom portion of the cheese during ripening. This is supposed to compensate the effect of moisture and salt sinking to lower portions of a cheese and retarding ripening there.

The infrared radiation source 8 is preferably adapted for emitting radiation in a wavelength range of 2.5-3.5 »m. A frequently used dispersion liquid is water (see also the dispersion mixture mentioned hereinabove by way of example).

The infrared radiation in a wavelength range of 2.5-3.5 »m is absorbed by water to a great extent, so that the irradiated dispersion liquid is properly heated and the parts of the cheese located towards the rear are heated to a relatively small degree.

In the embodiment of the apparatus according to the invention as shown, the means for removing evaporated dispersion liquid further comprise an element 9 for passing air along the cheese. By passing air along the cheese, the cheese can moreover be cooled, so that heating of the cheese is prevented.

In the embodiment shown, the element 9 referred to is a blowing element. In a simple manner, it enables a directed air stream to be passed along the surface of the cheese to be treated, which air stream spreads after having passed the cheese, so that a proper spread of evaporated dispersion liquid is obtained.

Further, in the apparatus according to the embodiment shown, the blowing element 9 is designed as a chamber 10 extending along at least a part of the conveyor track 1 and having outlet openings 11 directed along the conveyor track 1. The air pressure in the chamber 10 is substantially equal throughout the length of chamber 10 by virtue of its large diameter relative to the diameter of the outlet openings 11. As a result, given a mutually approximately equal diameter of the outlet openings 11, approximately equal amounts of air will flow from each outlet opening 11, so that the air passed along the cheeses is uniformly distributed over the conveyor track 1. Instead of several outlet openings 11, the chamber 10 or each chamber may have a single elongate outlet opening extending lengthwise approximately parallel to the conveyor track.

The outlet openings 11 in the embodiment shown are directed approximately transverse to the track 1. This also contributes to a uniformly distributed drying action over the conveyor track 1 of the air passed along the cheeses.

In the embodiment shown, the infrared radiation source 8 is arranged for emitting radiation in a direction which intersects the axis of the outlet opening 11 adjacent the conveyor track 1. It can thereby be accomplished that the infrared radiation intersects the air stream in front of the surface 7 of the cheese 6 to be treated. The surface 7 to be treated can thus be irradiated by the infrared radiation source at an approximately right angle while at the same time an air stream is passed along the surface 7 of the cheese to be treated. Thus, a further improved removal of the dispersion liquid is obtained. A further advantage is that the air stream has a cooling effect, so that the temperature rise of the irradiated portion of the cheese can be limited.

It is accordingly preferred for the air stream to have such a temperature that after the cheese 6 has been irradiated for some time, the temperature of the irradiated portion 7 of the cheese 6 is higher than the temperature of the air stream. At the same time, the radiation intensity and duration as well as the velocity and temperature of the air stream are preferably mutually adjusted in such a manner that the irradiated portion 7 of the cheese 6 remains below a predetermined temperature (preferably lower than approximately 30°C).

The air passed along the cheese can for instance have a temperature of approximately 13°C and a relative humidity of approximately 83%. Air of such a temperature and humidity is usually present in a cheese storage room, so that no additional steps need to be taken for supplying conditioned air. On the other hand, it will often be desirable to purify and disinfect the air. Optionally, it is also possible to pass air from elsewhere, for instance outside air, along the cheeses.

If desired, a variation of the intensity of the air stream along the conveyor track 1 can be obtained by varying the diameter of the outlet openings 11 along the conveyor track 1. For instance, an intensified air stream can be passed along the cheeses in the end area of the drying tunnel 5, where the cheeses have been irradiated relatively long and where accordingly a relatively large amount of dispersion liquid evaporates, so as to achieve a correspondingly intensified dissipatory and cooling action.

As will appear from the foregoing, drying cheeses by infrared radiation as such is very advantageous for evaporating liquid from cheeses, in that relatively little energy is used and no means are necessary for controlling the temperature and the humidity of the air which is passed along the cheeses. When cheeses that have not been provided with a dipserse mixture are dried, it is advantageous if the cheeses can be dried roundabout. The fact is that when no solid dispersed material adheres to the support, it is hardly objectionable if liquid is also evaporated from the support.

For drying cheeses roundabout, such as cheeses which have been washed, the apparatus according to the invention preferably comprises first support means which form a conveyor track and several infrared radiation sources are arranged spaced circumferentially along the conveyor track. By having infrared radiation sources burning only on one given side of the conveyor track, such an apparatus can also be used for evaporating liquid from substantially exclusively such portions of the cheese as are spaced from the conveyor track.

In the embodiment shown, the conveyor track 1 which forms the first support means is endless and passes through a cleaning station 12. Each part of the conveyor track which has passed the drying tunnel is automatically rinsed, so that caking of dispersed material is avoided or at least limited.

The cleaning station comprises an immersion bath 13 through which passes the conveyor track 1. By immersion, drying out of the disperse mixture clinging to the conveyor track is prevented.

The conveyor track 1 of the apparatus according to the embodiment shown comprises a chain 14, which is passed through a cross-shaped guide slot 15. Welded onto each second link 16 of the chain 14 is a rod 17 directed transversely to the direction of the chain and extending on opposite sides of the chain by appoximately the same extent. The rods 17 form a rack which constitutes an effective support for the cheeses, in such a way that they cannot cling to the support through suction, which would render it difficult to remove them therefrom. The support formed by the rods 17 can be passed around a bend both vertically and horizontally.

The means for driving the chain 14 comprise a motor 18 and a V-belt transmission 19, which is coupled to a return wheel 20 in the area of the immersion bath 13. Further, a bend of the chain 14 in the area of the immersion bath has been suitably used for arranging a chain tensioner 21 there.

As shown in Fig. 3, in the apparatus according to the embodiment shown, the infrared radiator 8 is suspended from the exterior of the drying tunnel 5 and opposite an opening 22 in the wall of the drying tunnel. The infrared radiator 8 is suspended in a housing 23, which in turn is mounted on the exterior of the drying tunnel 5. Consequently, detaching the housing 23 from the drying tunnel 5 permits the infrared radiator to be replaced externally of the drying tunnel 5, without requiring the drying tunnel to be opened for that purpose. Preferably, the infrared radiators are each provided with an indicating device generating a signal when the associated radiator has dropped out. Detaching the housing 23 from the drying tunnel 5 is particularly simple in that the housing 23 has been suspended from a pin 24 projecting obliquely upwards from the drying tunnel 5 and can simply be taken off.

## Claims

1. A method of applying a protective coating around a cheese (6) and storing that cheese (6), in which a disperse mixture comprising a dispersion liquid and a dispersed material is applied to the cheese and some disperse mixture ends up on a first support means, dispersion liquid is evaporated while the cheese (6) rests on the first support (1) and subsequently the cheese is placed on a second support where it is stored or whence it is transferred to a further support, characterized in that substantially exclusively dispersion liquid that has been applied to portions (7) of the surface of the cheese (6) that are located at a distance from the first support (1) is selectively evaporated, such that no or little liquid of the disperse mixture clinging to the first support is evaporated, whereafter, when placing the cheese on the second support, a portion (7) of the surface of the cheese from which dispersion liquid applied thereto has been selectively evaporated is turned towards that second support.

2. A method according to claim 1, characterized in that substantially exclusively dispersion liquid clinging to one side (7) of the cheese (6) is evaporated.

3. A method for drying cheese according to claim 1 or 2, characterized in that the cheese (6) is irradiated with infrared radiation for evaporating liquid.

4. A method according to any one of the preceding claims, characterized in that water is used as a dispersion liquid and the infrared radiation covers a wavelength range of 2.5-3.5 »m.

5. A method according to any one of the preceding claims, characterized in that for removing evaporated dispersion liquid, air is passed along said portion (7) of the cheese (6).

6. A method according to any one of claims 3 and 4, characterized in that after the cheese (6) has been irradiated for some time, the temperature of the irradiated portion (7) of the cheese (6) is higher than the temperature of the air stream and the radiation intensity and duration as well as the velocity and temperature of the air stream are mutually adjusted, in such a manner that the irradiated portion (7) of the cheese (6) also remains below a predetermined temperature.

7. A method acording to claim 6, characterized in that the air passed along the cheese has a temperature of approximately 13°C and a relative humidity of approximately 83%.

8. A method according to claim 6, characterized in that the irradiated portion (7) of the cheese (6) also remains below a temperature of 30°C.

9. A method according to any one of the preceding claims, characterized in that the first support means (1) are of endless design and periodically pass through a cleaning station (12).

10. A method according to claim 9, characterized in that the first support means (1) are periodically passed through an immersion bath (13).

11. An apparatus for use in the method according to any one of the preceding claims, comprising
first support means (1) in form of a conveyor track and
means (8; 9) for substantially selectively evaporating dispersion liquid from portions (7) of the surface of the cheese (6) which are located at a distance from the first support means (1),
wherein the means for evaporating dispersion liquid comprise an infrared radiation source (8) and a blowing element (9) for passing air along the cheese (6) and provided with at least one outlet opening (11) directed along the conveyor track (1),
and wherein the infrared radiation source (8) is arranged for emitting radiation in a direction which intersects the axis of the outlet opening (11) adjacent the conveyor track (1).

12. An apparatus according to claim 11, characterized in that the means (8; 9) for evaporating dispersion liquid from the cheese (6) are adapted for substantially selectively evaporating dispersion liquid from only one side (7) of the cheese (6).

13. An apparatus according to claim 11 or 12, characterized in that the infrared radiation source (8) is adapted for emitting radiation in a wavelength range of 2.5-3.5 »m.

14. An apparatus according to one of the claims 11-13, characterized in that the first support means (1) form a conveyor track, the conveyor track (1) extends through a drying tunnel (5) and the infrared radiation source (8) is suspended in a housing (23) closing an opening (22) in the wall of the drying tunnel (5).

15. An apparatus according to claim 14, characterized in that the drying tunnel (5) comprises pins (24) projecting adjacent said opening, which pins (24) can extend through corresponding openings of the housing (23) of the infrared radiation source (8), in such a manner that said housing (23) can be fitted from outside over the pins (24) so as to suspend against the drying tunnel (5).

16. An apparatus according to any one of claims 11-15, characterized in that the first support means (1) form a conveyor track, the conveyor track (1) extends through a drying tunnel (5) and a plurality of infrared radiation sources are arranged, spaced circumferentially of the drying tunnel.

17. An apparatus according to one of the claims 11-16, characterized in that the first support means (1) form a conveyor track and the blowing element (9) comprises a chamber (10) extending along the conveyor track (1) and having the at least one outlet opening (11) directed along the conveyor track (1).

18. An apparatus according to one of the claims 11-17, characterized in that the at least one outlet opening (11) is directed substantially transverse to the track (1).

19. An apparatus according to any one of claims 11-18, characterized in that the first support means (1) are constructed as an endless conveyor track passing through a cleaning station (12).

20. An apparatus according to claim 19, characterized in that the cleaning station (12) comprises an immersion bath (13) through which extends the conveyor track (1).

## Patentansprüche

1. Verfahren zum Aufbringen einer Schutzbeschichtung um einen Käse (6) und Lagern dieses Käses (6), wobei eine Dispersionsmischung, die eine Dispersionsflüssigkeit und ein dispergiertes Material enthält, auf einen Käse aufgebracht wird und etwas Dispersionsmischung auf einem ersten Trägermittel endet, und Dispersionsflüssigkeit verdampft wird, während der Käse (6) auf dem ersten Träger (1) ruht und der Käse anschließend auf einen zweiten Träger gesetzt wird, wo er gelagert wird oder von dem er zu einem weiteren Träger transferriert wird,
dadurch gekennzeichnet,
daß im wesentlichen ausschließlich Dispersionsflüssigkeit selektiv verdampft wird, die auf Teile (7) der Oberfläche des Käses (6) aufgetragen wurde, die in einem Abstand von dem ersten Träger (1) angeordnet sind, so daß keine oder nur wenig Flüssigkeit der Dispersionsmischung, die an dem ersten Träger haftet, verdampft wird, wonach, wenn der Käse auf den zweiten Träger gesetzt wird, ein Teil (7) der Oberfläche des Käses, von dem die darauf aufgebrachte Dispersionsflüssigkeit selektiv verdampft wurde, dem zweiten Träger zugewendet wird.

2. Verfahren gemäß Anspruch 1,
dadurch gekennzeichnet,
daß im wesentlichen ausschließlich Dispersionsflüssigkeit verdampft wird, die an einer Seite (7) des Käses (6) haftet.

3. Verfahren zum Trocknen von Käse gemäß den Ansprüchen 1 oder 2,
dadurch gekennzeichnet,
daß der Käse (6) mit Infrarotstrahlung bestrahlt wird, um Flüssigkeit zu verdampfen.

4. Verfahren gemäß einem der vorstehenden Ansprüche,
dadurch gekennzeichnet,
daß Wasser als Dispersionsflüssigkeit benutzt wird und die Infrarotstrahlung einen Wellenlängenbereich abdeckt von 2,5 bis 3,5 »m.

5. Verfahren gemäß einem der vorhergehenden Ansprüche,
dadurch gekennzeichnet,
daß zum Entfernen von verdampfter Dispersionsflüssigkeit Luft entlang dem genannten Teil (7) des Käses (6) vorbeigeführt wird.

6. Verfahren gemäß einem der Ansprüche 3 und 4,
dadurch gekennzeichnet,
daß nachdem der Käse (6) für einige Zeit bestrahlt wurde, die Temperatur des bestrahlten Teiles (7) des Käses (6) höher ist als die Temperatur des Luftstromes und daß die Bestrahlungsintensität und die Dauer als auch die Geschwindigkeit und die Temperatur des Luftstromes gemeinsam angepaßt werden, in einer Weise, daß der bestrahlte Teil (7) des Käses (6) ebenfalls unter einer vorbestimmten Temperatur bleibt.

7. Verfahren gemäß Anspruch 6,
dadurch gekennzeichnet,
daß die entlang dem Käse geführte Luft eine Temperatur von etwa 13 °C und eine relative Feuchtigkeit von etwa 83 % hat.

8. Verfahren gemäß Anspruch 6,
dadurch gekennzeichnet,
daß der bestrahlte Teil (7) des Käses (6) ebenfalls unter einer Temperatur von 30 °C bleibt.

9. Verfahren gemäß einem der vorhergehenden Ansprüche,
dadurch gekennzeichnet,
daß die ersten Trägermittel (1) eine endlose Konstruktion haben und periodisch durch eine Reinigungsstation (12) laufen.

10. Verfahren gemäß Anspruch 9,
dadurch gekennzeichnet,
daß die ersten Trägermittel (1) periodisch durch ein Tauchbad (13) laufen.

11. Vorrichtung zur Benutzung bei dem Verfahren gemäß einem der vorherigen Ansprüche,
mit ersten Trägermitteln (1) in Form eines Förderbandes und Mitteln (8; 9), um im wesentlichen selektiv Dispersionsflüssigkeit von Teilen (7) der Oberfläche des Käses (6) zu verdampfen, die sich in einem Abstand von dem ersten Trägermittel (1) befinden,
wobei die Mittel zum Verdampfen von Dispersionsflüssigkeit eine Infrarotstrahlungsquelle (8) und ein Gebläseelement (9) aufweisen, um Luft entlang dem Käse (6) zu leiten, und mit wenigstens einer Auslaßöffnung (11) versehen ist, die entlang dem Förderband (1) gerichtet ist,
und wobei die Infrarotstrahlungsquelle (8) angeordnet ist, um Strahlung in eine Richtung auszusenden, die sich mit der Achse der Auslaßöffnung (11) benachbart zum Förderband (1) schneidet.

12. Vorrichtung gemäß Anspruch 11,
dadurch gekennzeichnet,
daß die Mittel (8; 9) zum Verdampfen von Dispersionsflüssigkeit vom Käse (6) angepaßt sind, um im wesentlichen selektiv Dispersionsflüssigkeit nur von einer Seite (7) des Käses (6) zu verdampfen.

13. Vorrichtung gemäß Anspruch 11 oder 12,
dadurch gekennzeichnet,
daß die Infrarotstrahlungsquelle (8) angepaßt ist, um Strahlung in einem Wellenlängenbereich von 2,5 bis 3,5 »m zu emitieren.

14. Vorrichtung gemäß einem der Ansprüche 11 bis 13, dadurch gekennzeichnet,
daß die ersten Trägermittel (1) ein Förderband bilden, wobei das Förderband (1) sich durch einen Trockentunnel (5) erstreckt und die Infrarotstrahlungsquelle (8) in einem Gehäuse (23) gehalten ist, das eine Öffnung (22) in der Wand des Trockentunnels 5 schließt.

15. Vorrichtung gemäß Anspruch 14,
dadurch gekennzeichnet,
daß der Trockentunnel (5) Stifte (24) umfaßt, die benachbart zu der genannten Öffnung vorstehen, wobei diese Stifte (24) sich durch korrespondierende Öffnungen des Gehäuses (23) der Infrarotstrahlungsquelle erstrecken, in einer Weise, daß das genannte Gehäuse (23) von außen über die Stifte (24) angesetzt werden kann, um sich gegen den Trockentunnel (5) abzustützen.

16. Vorrichtung gemäß einem der Ansprüche 11 bis 15, dadurch gekennzeichnet,
daß die ersten Trägermittel (1) ein Förderband bilden, wobei das Förderband (1) sich durch einen Trockentunnel (5) erstreckt und eine Vielzahl von Infrarotstrahlungsquellen angeordnet sind, kreisförmig beabstandet zu dem Trockentunnel.

17. Vorrichtung gemäß einem der Ansprüche 11 bis 16, dadurch gekennzeichnet,
daß die ersten Trägermittel (1) ein Förderband bilden und das Gebläseelement (9) eine Kammer (10) umfaßt, die sich entlang dem Förderband (1) erstreckt und wenigstens eine Auslaßöffnung (11) hat, die entlang dem Förderband (1) gerichtet ist.

18. Vorrichtung gemäß einem der Ansprüche 11 bis 17, dadurch gekennzeichnet,
daß die wenigstens eine Auslaßöffnung (11) im wesentlichen quer zum Band (1) gerichtet ist.

19. Vorrichtung gemäß einem der Ansprüche 11 bis 18, dadurch gekennzeichnet,
daß die ersten Trägermittel (1) als ein Endlosforderband ausgebildet sind, das durch eine Reinigungsstation (12) läuft.

20. Vorrichtung gemäß Anspruch 19,
dadurch gekennzeichnet,
daß die Reinigungsstation (12) ein Tauchbad (13) umfaßt, durch das sich das Förderband (1) erstreckt.

## Revendications

1. Procédé pour appliquer une couche de protection autour d'un fromage (6) et pour entreposer ce fromage (6), dans lequel un mélange dispersable comportant un liquide de dispersion et un matériau dispersé est appliqué sur le fromage et un peu de mélange dispersable aboutit sur un premier moyen de support, et du liquide de dispersion est évaporé alors que le fromage (6) repose sur le premier moyen de support (1), et dans lequel le fromage (6) est ensuite placé sur un second support sur lequel il est entreposé ou duquel il est transféré vers un autre support, caractérisé en ce que pratiquement seul le liquide de dispersion appliqué à des parties (7) de la surface du fromage (6) situées à distance du premier support (1) est évaporé sélectivement, de façon que peu ou pas de liquide du mélange dispersable s'accrochant au premier support ne soit évaporé, et qu'ensuite, lorsque l'on place le fromage sur le second support, une portion (7) de la surface du fromage, de laquelle le liquide de dispersion appliqué dessus a été sélectivement évaporé, est tourné en direction de ce second support.

2. Procédé selon la revendication 1, caractérisé en ce que pratiquement seul le liquide de dispersion s'accrochant à un côté (7) du fromage (6) est évaporé.

3. Procédé pour sécher du fromage, selon la revendication 1 ou la revendication 2, caractérisé en ce que le fromage (6) est irradié par un rayonnement infrarouge pour évaporer le liquide.

4. Procédé selon l'une quelconque des revendications précédentes, caractérisé en ce que l'eau est utilisée comme liquide de dispersion, et le rayonnement infrarouge recouvre une gamme de longueurs d'ondes allant de 2,5 à 3,5 »m.

5. Procédé selon l'une quelconque des revendications précédentes, caractérisé en ce que, pour enlever le liquide de dispersion évaporé, on fait passer de l'air le long de la portion (7) du fromage (6).

6. Procédé selon la revendication 3 ou la revendication 4, caractérisé en ce que, après que le fromage (6) a été irradié pendant une certaine durée, la température de la portion (7) du fromage (6) qui a été irradiée est plus élevée que la température du courant d'air, et l'intensité de la radiation ainsi que la durée, la vitesse et la température du courant d'air sont ajustées mutuellement, de telle façon que la portion irradiée (7) du fromage (6) reste également en-dessous d'une température prédéterminée.

7. Procédé selon la revendication 6, caractérisé en ce que l'air passant sur le fromage est à une température d'environ 13°C, et présente une humidité relative d'environ 83 %.

8. Procédé selon la revendication 6, caractérisé en ce que la portion irradiée (7) du fromage (6) reste également en-dessous d'une température de 30°C.

9. Procédé selon l'une quelconque des revendications précédentes, caractérisé en ce que le premier moyen de support (1) est de type à défilement continu, en passant périodiquement au travers d'une station de nettoyage (12).

10. Procédé selon la revendication 9, caractérisé en ce que le premier moyen de support (1) passe périodiquement au travers d'un bain d'immersion (13).

11. Installation de mise en oeuvre du procédé selon l'une quelconque des revendications précédentes, comportant :
un premier moyen de support (1) réalisé sous la forme d'un chemin de convoyage, et des moyens (8 ; 9) pour évaporer sélectivement, et de façon substantielle, le liquide de dispersion présent sur des portions (7) de la surface du fromage (6) qui sont situées à distance du premier moyen de support (1),
dans lequel les moyens pour évaporer le liquide de dispersion comportent une source (8) de rayonnement infrarouge, ainsi qu'un élément de soufflage (9) servant à faire passer de l'air sur le fromage (6) et équipé d'au moins une ouverture de sortie (11) dirigée le long du chemin de convoyage (1),
et dans lequel la source de rayonnement infrarouge (8) est disposée pour émettre un rayonnement dans une direction qui coupe l'axe de l'ouverture de sortie (11) au voisinage du chemin de convoyage (1).

12. Installation selon la revendication 11, caractérisée en ce que les moyens (8 ; 9) pour évaporer le liquide de dispersion présent sur le fromage (6) sont agencés pour évaporer essentiellement sélectivement le liquide de dispersion présent sur un seul côté (7) du fromage (6).

13. Installation selon la revendication 11 ou la revendication 12, caractérisée en ce que la source de rayonnement infrarouge (8) est agencée pour émettre un rayonnement dont la longueur d'onde se situe dans la gamme allant de 2,5 à 3,5 »m.

14. Installation selon l'une des revendications 11 à 13, caractérisée en ce que le premier moyen de support (1) forme un chemin de convoyage, ledit chemin de convoyage (1) s'étendant au travers d'un tunnel de séchage (5), et la source de rayonnement infrarouge (8) est suspendue dans un boîtier (23) qui ferme une ouverture (22) de la paroi du tunnel de séchage (5).

15. Installation selon la revendication 14, caractérisée en ce que le tunnel de séchage (5) comporte des doigts (24) saillant au voisinage de ladite ouverture, lesquels doigts (24) peuvent s'étendre au travers d'ouvertures correspondantes ménagées dans le boîtier (23) de la source de rayonnement infrarouge (8), de telle façon que ledit boîtier (23) puisse être monté depuis l'extérieur sur les doigts (24), en suspension contre le tunnel de séchage (5).

16. Installation selon l'une quelconque des revendications 11 à 15, caractérisée en ce que le premier moyen de support (1) forme un chemin de convoyage, ledit chemin de convoyage s'étendant au travers d'un tunnel de séchage (5), et une pluralité de sources de rayonnement infrarouge sont prévues, en étant disposées circonférenciellement autour du tunnel de séchage.

17. Installation selon l'une quelconque des revendications 11 à 16, caractérisée en ce que le premier moyen de support (1) forme un chemin de convoyage, et l'élément de soufflage (9) comporte une chambre (10) s'étendant le long du chemin de convoyage (1), et présentant sa ou ses ouverture de sortie (11) dirigées le long du chemin de convoyage (1).

18. Installation selon l'une quelconque des revendications 11 à 17, caractérisée en ce que la ou les ouvertures de sortie (11) sont dirigées essentiellement transversalement au chemin de convoyage (1).

19. Installation selon l'une quelconque des revendications 11 à 18, caractérisée en ce que le premier moyen de support (1) est réalisé sous la forme d'un chemin de convoyage sans fin passant au travers d'une station de nettoyage (12).

20. Installation selon la revendication 19, caractérisée en ce que la station de nettoyage (12) comporte un bain d'immersion (13) à travers lequel passe le chemin de convoyage (1).
